# EUROPEAN PATENT SPECIFICATION

(11) **EP 3 420 256 B1**
(45) Date of publication and mention of the grant of the patent: **01.04.2020**
(21) Application number: 17715272.5
(22) Date of filing: 23.02.2017
(51) Int. Cl.: F16K 5/06, F16K 11/087, F16K 27/06

(54) **BALL VALVE AND MANUFACTURING METHOD**
KUGELVENTIL UND HERSTELLUNGSVERFAHREN
ROBINET À BILLE ET PROCÉDÉ DE FABRICATION

(30) Priority: 26.02.2016 IT UB20161092
(43) Date of publication of application: 02.01.2019
(73) Proprietor: Bonomi Industries S.r.l., 25080 Mazzano (BS) (IT)
(72) Inventor: BONOMI, Giuliano, 25080 Mazzano (Brescia) (IT); RABAIOLI, Sandro, 25080 Mazzano (Brescia) (IT)
(74) Representative: Chimini, Francesco
(86) International application number: PCT/IB2017/051031
(87) International publication number: WO 2017/145081

(56) References cited:
- EP-A2- 2 299 152
- WO-A1-84/01799
- WO-A1-2015/173071
- US-A- 3 083 945
- US-A- 3 195 857
- US-A- 3 219 055
- US-A- 4 606 820
- US-A1- 2010 193 043

## Description

The present invention relates to a ball valve with at least three ways, and to a manufacturing method of a ball valve.

E.g. DE3941153A1, EP2299152A2, WO84/01799A1, US2010/193043A1 disclose valves according to the preamble of claim 1.

A traditional manufacturing method of a three-way ball valve provides for the formation of an outer structure, the positioning of sealing means into the structure and the retention of such means by means of three separate locking elements (so called "ball pressing elements").

The latter are essentially annular elements which, once connected to the outer structure, compress and retain the sealing means to ensure a sealing of the valve in the various positions of the ball.

Such solution has the advantage of allowing the positioning of the sealing means after the ball has been placed into the outer structure.

However, the known solution entails a series of drawbacks, not least the high number of components to be associated to the structure, and a considerable size of the latter to prevent undesirable interactions between the threads required for the connection of the ball pressing elements.

The present invention belongs to such context, offering to provide a valve and a method capable of overcoming the aforesaid drawbacks. In particular, the present invention allows to obtain the concomitant effects of reducing the total number of pieces required for the correct operation of the valve, and of considerably limiting the encumbrance and the weight of the valve, at least in a parity of fluid delivered to the interior thereof.

Such objective is achieved by means of a ball valve according to claim 1, and by means of a method according to claim 9. The claims dependent therefrom show variants of preferred embodiments.

The object of the present invention will now be described in detail, with the aid of the attached figures, in which:
- Figure 1 shows an exploded view of a ball valve, object of the present invention, according to a possible embodiment;
- Figure 2 shows a section of the assembled valve of Figure 1, along the plane P in which the development axes of the three fluidic ducts are arranged.

With reference to the above Figures, reference number 1 describes, in its totality, a ball valve.

Such valve 1 comprises a valve body 2, at least one hollow ball 14, two or more sealing elements 10, 10', 12 and a ball-compressing element 16.

The valve body 2 delimits at least one sealing seat 4, 46, a ball seat 6 and at least three fluidic ducts 8, 8', 8" that converge in the ball seat 6.

According to a variant, the valve body 2 delimits a single ball seat 6.

The valve body 2 delimits two or three sealing seats 4, 46. According to such variant, the valve 1 preferably comprises sealing elements 10, 12 in equal number with respect to the number of such seats 4, 46.

The valve body 2 delimits three or four fluidic ducts 8, 8', 8".

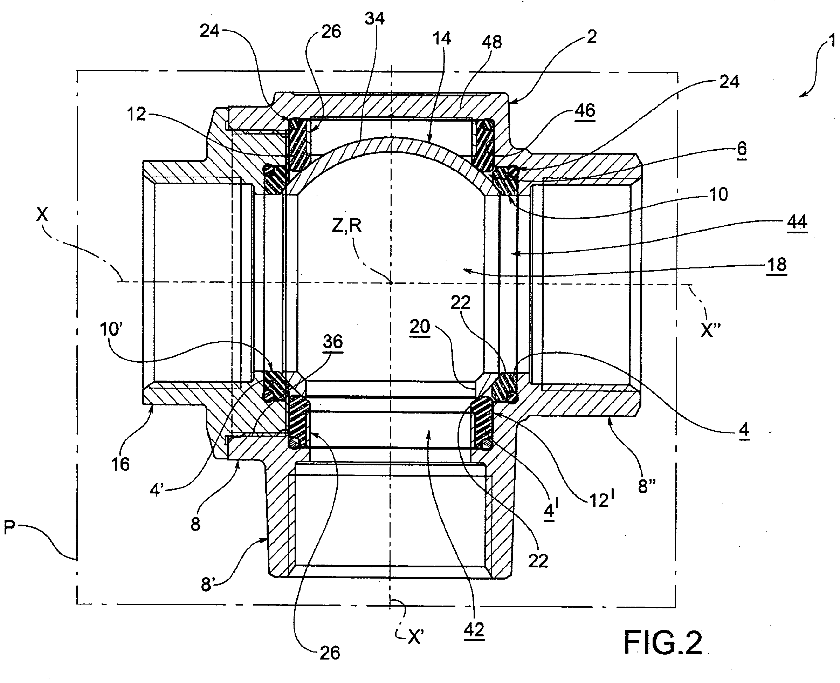

For the embodiment of a valve with at least three ways, the at least three fluidic ducts 8, 8', 8" preferably develop around development axes X, X', X" which lie substantially in a same plane P, as outlined for example in Figure 2.

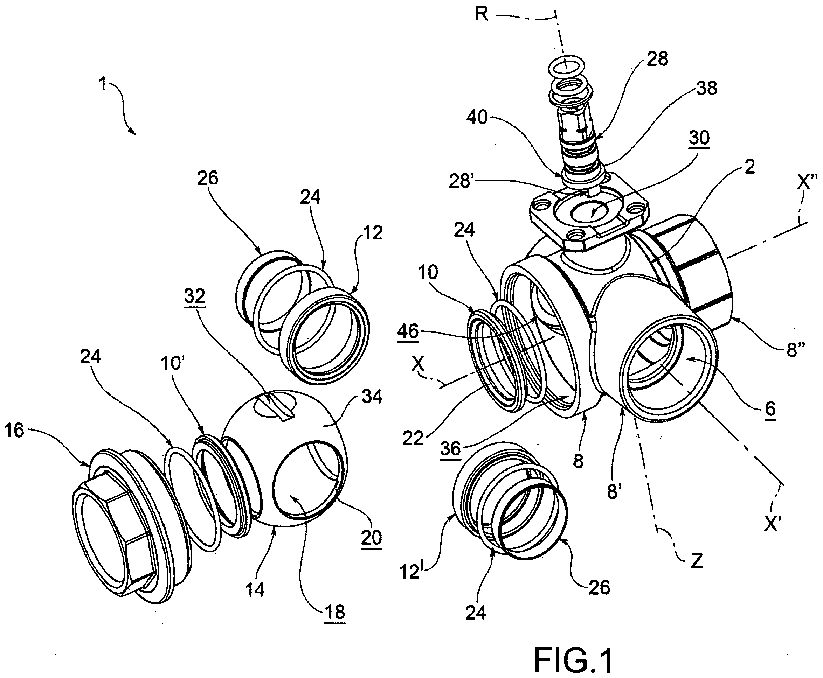

In a not-shown embodiment, relating to valves with at least four ways, such valve may comprise an optional fourth duct which develops about a further development axis Z (outlined for example in Figures 1, 2) incident, preferably orthogonal, with respect the aforesaid plane P.

In a further non-shown embodiment, relating to valves with at least four ways, such valve may comprise an optional fourth duct which develops about a further development axis Z lying in the same plane P in which the development axes X, X', X" of the other fluidic ducts 8, 8', 8" are placed.

Preferably, the valve body 2 delimits a sealing seat 4' to a proximal inlet 42, 44 of only two fluidic ducts 8', 8", where the term "proximal" refers to the closeness or proximity to the ball seat 6.

Optionally, one of the fluidic ducts 8' may be facing a body wall 48 of the valve body 2 which, along the development axis X', overlaps in a prevalent or complete manner the passage section of such duct 8'.

According to such embodiment, a sealing seat 46 may be identified at the body wall 48 and, more precisely, between the body wall 48 and the hollow ball 14.

According to a possible variant of the valve with at least four ways, the optional fourth duct may be placed at (specifically: in partial or complete replacement) the body wall 48 just discussed.

The hollow ball 14 is received in the ball seat 6 and is movable with respect to the valve body 2 to allow/prevent the fluidic communication between the aforesaid fluidic ducts 8, 8', 8", for example between pairs of ducts.

The valve 1 comprises hollow balls 14 in equal number with respect to the ball seats 6 delimited by the valve body 2.

Preferably, the hollow ball 14 is rotatable with respect the valve body 2 about a rotation axis R. For example, the rotation axis R may be orthogonal to the plane P.

More precisely, the ball valve 1 may comprise a control rod 28 of the hollow ball 14, inserted in a rod seat 30 delimited by the valve body 2, in a manner partially protruding from such body. Preferably, the rod seat 30 is adjacent to the ball seat 6.

In the embodiment outlined in Figure 1, the control rod 28 is preferably inserted/engaged in an outer slit 32 of the hollow ball 14, in particular at a first end portion 28' thereof. Advantageously, such first end portion 28' is conformed to be coupled by shape and/or with force to the outer slit 32.

Optionally, the control rod 28 may comprise a rod projection 40 delimiting an annular surface 38 configured to abut against an inner surface (not visible in the Figures, but facing the ball seat 6) of the valve body 1. For example, the rod projection 40 is placed at the first end portion 28'.

At a second end portion 28" of the control rod 28 an actuator element may be fastened (not shown), for example a knob or a lever, to move the hollow ball 14 preferably in rotation.

In relation to the number of ducts which may be put in communication to one another, this depends on the type of through cavity 18 the hollow ball 14 identifies inside itself.

According to various embodiments, the through cavity 18 may be substantially cylindrical, having an "L" or "T" shape, the latter variant being for example shown in the figures.

According to a particularly preferred embodiment, the through cavity 18 has at least one annular inlet 20 (preferably: all the inlets thereof) of a size at least equal to or greater than an inner edge 22 of the sealing element 10, 12 received in the valve body 2.

As a result, according to such variant, the annular inlet 20 does not protrude into the fluidic ducts.

With regard to the fluidic ducts 8, 8', 8", one or more ducts preferably comprise mechanical means for coupling with one or more outer ducts (not shown in the figures), to which the present valve 1 is joinable.

By way of example, the mechanical coupling means may comprise an inner thread of the fluidic duct 8, 8', 8", an outer thread, or a nut coupling (of the "nut-and-tail" type).

At least one of the two or more sealing elements 10, 10', 12 is placed in the sealing seat 4, 46 in abutment with the hollow ball 14 and, more precisely, in abutment with an outer surface 34 of the latter.

Only one of the aforementioned fluidic ducts acts as an introduction duct 8 of the sealing element 10, 12 and of the hollow ball 14 inside the valve body 2, for positioning such element 10, 12 and such ball 14 respectively in the sealing seat 4, 46 and in the ball seat 6.

As a result, preferably, the introduction duct 8 circumscribes a transit section 36 greater than the encumbrance of the hollow ball 14 and than the encumbrance of the sealing element 10, 12, or the plurality of sealing elements, associated to the valve body 2.

Thereby, all of the components discussed above may be introduced from the same side of the valve body, by means of the introduction duct 8.

The ball valve 1 further comprises a ball-compressing element 16 delimiting a further sealing seat 4' to receive the other sealing element 10' and connected to the introduction duct 8 of the valve body 2 to press such element 10' against the hollow ball 14.

Therefore, in addition to the sealing elements 10, 12 discussed above, the valve comprises another sealing element 10' placed at the ball-compressing element, so that the latter may press the element 10' against the hollow ball.

In the embodiment shown, the ball-compressing element 16 comprises an annular body fastened to the introduction duct 8.

According to the discussed variants, any one of the sealing elements 10, 10', 12 may be of annular or tubular shape. One or more of the sealing elements 10, 10', 12 develops around the respective development axis X, X', X", and is preferably mounted coaxially to the fluidic duct.

Merely by way of example, the ball-compressing element 16 is joined, for example screwed and/or welded, in an irreversible manner to the valve body 2.

According to an advantageous variant, the valve 1 comprises an elastic element 24 at at least one sealing seat 4, 4', 46, more precisely between the sealing element 10, 12 and the valve body 2 and/or between the other sealing element 10' and the ball-compressing element 16.

The elastic element 24 is advantageously compressible by the hollow ball 14 to insert it into, and possibly remove it from, the ball seat 6.

Specifically, since the hollow ball 14 is inserted in the seat 6 thereof after one or more sealing elements 10, 12 were placed, the insertion of the ball may be uncomfortable due to the encumbrance of the elements already positioned in the valve body.

One or more sealing elements 12 are coupled to a reinforcement element 26 (for example of an annular or tubular shape), at least partially inserted into the sealing seat 4, 46 to limit deformation of said sealing element 12 upon movement of the hollow ball 14 in the ball seat 6.

The reinforcement element 26 is at least partially received in the sealing element 12 with respect to the development axis X, X', X", the reinforcement element 26 is radially internally arranged with respect to the sealing element 12.

The elastic element 24 and/or the reinforcement element 26 - if provided - are introduced into the valve body 2, at the sealing seat 4, 46, by means of the introduction duct 8.

The aforesaid objectives are also achieved by means of a manufacturing method of a ball valve as described below.

Such manufacturing method is aimed at obtaining the ball valve 1 according to any of the previous embodiments. As a result, even where this is not expressly stated, such method may comprise any preferred or incidental feature deductible - from the process or the structure point of view - from the above description.

The manufacturing method comprises the steps of:
i) providing a valve body 2 which delimits at least one sealing seat 4, 46, a ball seat 6 and at least three fluidic ducts 8, 8', 8" which converge in the ball seat 6;
ii.a) through only one of said fluidic ducts, which serves as an introduction duct (8) of sealing elements (10, 12) in equal number with respect to the number of such seats (4, 46) inside the valve body (2), positioning said elements (10, 12) in the sealing seats (4, 4', 46);
ii.b) introducing a reinforcement element (26) into the valve body (2), at the sealing seat (4, 46), by means of the introduction duct (8); whereby the reinforcement element (26) is at least partially received in the sealing element (12) and, with respect to a development axis (X, X', X") around which one or more of said fluidic ducts (8, 8', 8") develop, the reinforcement element (26) is arranged only radially internally with respect to the sealing element (12);
iii) through the introduction duct 8, positioning at least one hollow ball 14 in the ball seat 6, in abutment with the sealing element 10, 12, whereby the ball 14 is movable in the seat 6 thereof with respect to the valve body 2 to allow/prevent the fluidic communication between the various ducts 8, 8', 8";
iv) connecting a ball-compressing element 16, delimiting a further sealing seat 4' to receive another sealing element 10', to the introduction duct 8 of the valve body 2 to press such element 10' against the hollow ball 14.

According to a particularly advantageous embodiment, the step ii) comprises a step of positioning an elastic element 24 at least at one sealing seat 4, 4', 46, in particular between the sealing element 10, 12 and the valve body 2 and/or between the sealing element 10' and the ball-compressing element 16.

According to an advantageous aspect of such solution, the elastic element 24 is compressible by the hollow ball 14 during the step iii) of inserting it into, and possibly removing it from, the ball seat 6.

According to a further variant, the method may comprise the sub-steps of: a) upstream step iii) and by means of the introduction duct 8, inserting a control rod 28 in the valve body 2; b) arranging the rod in a rod seat 30 delimited by a valve body 2, adjacent to the ball seat 6, in a manner partially protruding from the valve body 2; c) during step iii), engaging the control rod 28 in an outer slit 32 of the hollow ball 14.

Innovatively, the valve and the method object of the present invention allow to effectively overcome the drawbacks complained in relation to the prior art.

More precisely, the present valve and the present method are designed to reduce the number of ball-compressing elements associated to the valve body, and to considerably limit encumbrance and use of materials required for manufacturing such valve.

Advantageously, the valve and the method object of the present invention allow to obtain a substantially full passage of fluid inside the valve, since the ducts are essentially free of bottlenecks, both upstream and downstream the ball.

Advantageously, with parity of fluid delivered, the valve and the method of the present invention allow to achieve smaller, lighter valves manufactured in a more economical manner.

Advantageously, the valve of the present invention allows to obtain sealing seats perfectly aligned to one another, with a consequent increase of reliability.

Advantageously, the valve of the present invention is extremely versatile with regard to the possibility of connecting to various kinds of installations.

Advantageously, the valve and the method of the present invention allow to obtain an extremely easier mounting, since the seals are not stressed (and therefore not at risk of deterioration) when inserting the ball into the valve body.

Advantageously, the valve of the present invention has an extremely reliable and reproducible operation, particularly thanks to the measures described above.

A skilled in the art, in order to meet specific needs, may introduce to the embodiments of the ball valve and of the aforesaid method, changes and variants or replacements of elements with other functionally equivalent.

In addition, such variants are contained within the scope of protection as defined by the following claims.

Furthermore, each variant described as belonging to a possible embodiment is feasible independently from the other described variants.

## Claims

1. Ball valve (1) comprising:
- a valve body (2) that delimits at least one sealing seat (4, 4', 46), a ball seat (6) and at least three fluidic ducts (8, 8', 8") that converge in the ball seat (6) ;
- at least one hollow ball (14), received in the ball seat (6) and movable with respect to the valve body (2) to allow/prevent a fluidic communication between said fluidic ducts (8, 8', 8"), for example between pairs of ducts;
- two or more sealing elements (10, 10', 12), at least one of which is placed in the sealing seat (4, 4', 46), in abutment with said ball (14);
wherein only one of said fluidic ducts acts as an introduction duct (8) of the sealing element (10, 12) and of the hollow ball (14) inside the valve body (2), for positioning said element (10, 12) and said ball (14) respectively in the sealing seat (4, 4', 46) and in the ball seat (6);
- a ball-compressing element (16) delimiting a further sealing seat (4') to receive the other sealing element (10') and connected to the introduction duct (8) of the valve body (2) to press said element (10') against the hollow ball (14);
wherein the valve body (2) delimits three sealing seats (4, 4', 46), and wherein said ball valve (1) comprises sealing elements (10, 12) in equal number with respect to the number of such seats (4, 4', 46);
said ball valve (1) being **characterized in** comprising:
- a reinforcement element (26) coupled to one or more sealing elements (12), at least partially inserted into the sealing seat (4, 4', 46) to limit deformation of said sealing element (12) upon movement of the hollow ball (14) in the ball seat (6);
the reinforcement element (26) being at least partially received in the sealing element (12) and, with respect to a development axis (X, X', X") around which one or more of said fluidic ducts (8, 8', 8") develop, the reinforcement element (26) being arranged only radially internally with respect to the sealing element (12).

2. Valve according to claim 1, wherein the introduction duct (8) circumscribes a transit section (36) larger than the encumbrance of the hollow ball (14) and than the encumbrance of the sealing elements (10, 12) associated to the valve body (2).

3. Valve according to claim 1 or 2, wherein the hollow ball (14) identifies inside itself a through cavity (18) having at least one annular inlet (20) of a size at least equal to, or greater than, an inner edge (22) of the sealing element (10) received in the valve body (2).

4. Valve according to any of the preceding claims, comprising an elastic element (24) in correspondence of at least one sealing seat (4, 4', 46), between the sealing element (10, 12) and the valve body (2) and/or between the sealing element (10') and the ball-compressing element (16), said elastic element (24) being compressible by the hollow ball (14) to insert the latter into, and eventually remove it from, the ball seat (6).

5. Valve according to any of the preceding claims, wherein the reinforcement element (26) is of an annular or of a tubular shape.

6. Valve according to any of the preceding claims, wherein at least three fluidic ducts (8, 8', 8") develop around development axes (X, X', X") that lie substantially in a same plane (P), and comprising an optional fourth duct that develops around a further development axis (Z) incident or orthogonal to said plane (P) .

7. Valve according to any of the preceding claims, wherein the valve body (2) delimits three or four fluidic ducts (8, 8', 8").

8. Valve according to any of the preceding claims, in which the hollow ball (14) identifies inside itself a substantially cylindrical through cavity (18), or having an "L" or "T" shape.

9. Method of fabrication of a ball valve (1) according to any of the preceding claims, comprising the steps of:
i) providing a valve body (2) that delimits three sealing seats (4, 4', 46), a ball seat (6) and at least three fluidic ducts (8, 8', 8") that converge in the ball seat (6) ;
ii.a) through only one of said fluidic ducts, which serves as an introduction duct (8) of sealing elements (10, 12) in equal number with respect to the number of such seats (4, 46) inside the valve body (2), positioning said elements (10, 12) in the sealing seats (4, 4', 46);
ii.b) introducing a reinforcement element (26) into the valve body (2), at the sealing seat (4, 46), by means of the introduction duct (8); whereby the reinforcement element (26) is at least partially received in the sealing element (12) and, with respect to a development axis (X, X', X") around which one or more of said fluidic ducts (8, 8', 8") develop, the reinforcement element (26) is arranged only radially internally with respect to the sealing element (12);
iii) through the introduction duct (8), positioning at least one hollow ball (14) in the ball seat (6), in abutment with said sealing elements (10, 12), said ball (14) being movable with respect to the valve body (2) to allow/prevent the fluidic communication between said ducts (8, 8', 8");
iv) connecting a ball-compressing element (16), delimiting a further sealing seat (4') to receive another sealing element (10'), to the introduction duct (8) of the valve body (2) to press said element (10') against the hollow ball (14).

10. Method according to the preceding claim, wherein step ii) comprises a step of positioning an elastic element (24) in correspondence of at least one sealing seat (4, 4', 46), between the sealing element (10, 12) and the valve body (2) and/or between the sealing element (10') and the ball-compressing element (16), said elastic element (24) being compressible by the hollow ball (14) during step iii) to insert it into, and possibly remove it from, the ball seat (6).

## Patentansprüche

1. Kugelventil (1) umfassend:
- einen Ventilkörper (2), der mindestens einen Dichtungssitz (4, 4', 46), einen Kugelsitz (6) und mindestens drei Fluidkanäle (8, 8', 8"), die im Kugelsitz zusammenlaufen, begrenzt (6):
- mindestens eine Hohlkugel (14), die in dem Kugelsitz (6) aufgenommen und in Bezug auf den Ventilkörper (2) beweglich ist, um eine Fluidverbindung zwischen den genannten Fluidkanälen (8, 8', 8"), beispielsweise zwischen Paaren von Kanälen, zu ermöglichen/zu verhindern:
- zwei oder mehr Dichtungselemente (10, 10', 12), von denen mindestens eines im Dichtungssitz (4, 4', 46) angeordnet ist, in Anlage an die genannte Kugel (14);
wobei nur einer der genannten Fluidikkanäle als Einführungskanal (8) für das Dichtungselement (10, 12) und für die Hohlkugel (14) im Inneren des Ventilkörpers (2) dient, um das Element (10, 12) und die Kugel (14) jeweils im Dichtungssitz (4, 4', 46) und im Kugelsitz (6) zu positionieren;
- ein Kugeldruckelement (16), das einen weiteren Dichtungssitz (4') zur Aufnahme des anderen Dichtelements (10') begrenzt und mit dem Einführungskanal (8) des Ventilkörpers (2) verbunden ist, um das Element (10') gegen die Hohlkugel (14) zu drücken;
wobei der Ventilkörper (2) drei Dichtungssitze (4, 4', 46) begrenzt, und wobei das Kugelventil (1) Dichtungselemente (10, 12) in gleicher Anzahl in Bezug auf die Anzahl solcher Sitze (4, 4', 46) aufweist: wobei das Kugelventil (1) **dadurch gekennzeichnet ist, dass** es Folgendes umfasst:
- ein Verstärkungselement (26), das mit einem oder mehreren Dichtungselementen (12) gekoppelt ist, die zumindest teilweise in den Dichtungssitz (4, 4', 46) eingesetzt sind, um eine Verformung des Dichtungselements (12) bei Bewegung der Hohlkugel (14) im Kugelsitz (6) zu begrenzen;
wobei das Verstärkungselement (26) zumindest teilweise in dem Dichtungselement (12) aufgenommen ist und in Bezug auf eine Erstreckungsachse (X, X', X"), um die herum einer oder mehrere der genannten Fluidikkanäle (8, 8', 8") ausgestaltet sind, das Verstärkungselement (26) nur radial innen in Bezug auf das Dichtelement (12) angeordnet ist.

2. Ventil nach Anspruch 1, wobei der Einführungskanal (8) einen Übergangsabschnitt (36) umschreibt, der größer ist als die Außenkontur der Hohlkugel (14) und als die Außenkontur der dem Ventilkörper (2) zugeordneten Dichtungselemente (10, 12).

3. Ventil nach Anspruch 1 oder 2, bei dem die Hohlkugel (14) in sich selbst einen durchgehenden Hohlraum (18) mit mindestens einem ringförmigen Einlass (20) mit einer Größe, die mindestens gleich oder größer als eine Innenkante (22) des im Ventilkörper (2) aufgenommenen Dichtungselements (10) ist, ausweist.

4. Ventil nach einem der vorstehenden Ansprüche, mit einem elastischen Element (24) in Entsprechung zu mindestens einem Dichtungssitz (4, 4', 46) zwischen dem Dichtungselement (10, 12) und dem Ventilkörper (2) und/oder zwischen dem Dichtungselement (10') und dem Kugeldruckelement (16), wobei das elastische Element (24) durch die Hohlkugel (14) komprimierbar ist, um diese in den Kugelsitz (6) einzuführen und gegebenenfalls aus diesem zu entfernen.

5. Ventil nach einem der vorstehenden Ansprüche, wobei das Verstärkungselement (26) eine Ring- oder Rohrform hat.

6. Ventil nach einem der vorstehenden Ansprüche, bei dem mindestens drei Fluidikkanäle (8, 8', 8") um Erstreckungsachsen (X, X', X") ausgestaltet sind, die im Wesentlichen in einer gleichen Ebene (P) liegen, und mit einem optionalen vierten Kanal, der um eine weitere Erstreckungsachse (Z) ausgestaltet ist, die auf die Ebene (P) auftrifft oder orthogonal zu ihr verläuft.

7. Ventil nach einem der vorstehenden Ansprüche, wobei der Ventilkörper (2) drei oder vier Fluidikkanäle (8, 8', 8") begrenzt.

8. Ventil nach einem der vorstehenden Ansprüche, bei dem die Hohlkugel (14) in sich selbst einen im Wesentlichen zylindrischen, durchgehenden Hohlraum (18) aufweist oder eine "L"- oder "T"-Form hat.

9. Verfahren zur Herstellung eines Kugelventils (1) nach einem der vorstehenden Ansprüche, das die folgenden Schritte umfasst:
i) Bereitstellen eines Ventilkörpers (2), der drei Dichtungssitze (4, 4', 46), einen Kugelsitz (6) und mindestens drei Fluidkanäle (8, 8', 8"), die im Kugelsitz (6) zusammenlaufen, begrenzt;
ii.a) Positionieren der Elemente (10, 12) in den Dichtungssitzen (4, 4', 46) durch nur einen der genannten Fluidikkanäle, der als Einführungskanal (8) von Dichtungselementen (10, 12) in gleicher Anzahl in Bezug auf die Anzahl solcher Sitze (4, 46) innerhalb des Ventilkörpers (2) dient;
ii.b) Einführen eines Verstärkungselements (26) in den Ventilkörper (2) am Dichtungssitz (4, 46) mittels des Einführungskanals (8); wobei das Verstärkungselement (26) zumindest teilweise im Dichtungselement (12) aufgenommen wird und das Verstärkungselement (26) in Bezug auf eine Erstreckungsachse (X, X', X"), um die herum einer oder mehrere der genannten Fluidikkanäle (8, 8', 8") verlaufen, nur radial innen in Bezug auf das Dichtungselement (12) angeordnet ist;
iii) Positionieren mindestens eine Hohlkugel (14) in dem Kugelsitz (6) in Anlage an die Dichtungselemente (10, 12) durch den Einführungskanal (8), wobei die Kugel (14) in Bezug auf den Ventilkörper (2) beweglich ist, um die Fluidverbindung zwischen den Kanälen (8, 8', 8") zu ermöglichen/zu verhindern;
iv) Verbinden eines Kugeldruckelements (16), das einen weiteren Dichtungssitz (4') zur Aufnahme eines anderen Dichtungselements (10') begrenzt, mit dem Einführungskanal (8) des Ventilkörpers (2), um das Element (10') gegen die Hohlkugel (14) zu drücken.

10. Verfahren nach dem vorstehenden Anspruch, wobei Schritt ii) einen Schritt des Positionierens eines elastischen Elements (24) in Entsprechung zu mindestens einem Dichtungssitz (4, 4', 46) zwischen dem Dichtungselement (10, 12) und dem Ventilkörper (2) und/oder zwischen dem Dichtungselement (10') und dem Kugeldruckelement (16), wobei das elastische Element (24) durch die Hohlkugel (14) bei Schritt iii) komprimierbar ist, um diese in den Kugelsitz (6) einzuführen und gegebenenfalls aus diesem zu entfernen.

## Revendications

1. Robinet à bille (1) comprenant :
- un corps de robinet (2) qui délimite au moins un siège d'étanchéité (4, 4', 46), un siège de bille (6) et au moins trois conduites fluidiques (8, 8', 8") qui convergent dans le siège de bille (6) ;
- au moins une bille creuse (14), reçue dans le siège de bille (6) et mobile par rapport au corps de robinet (2) pour permettre/empêcher une communication fluidique entre lesdites conduites fluidiques (8, 8', 8"), par exemple entre des paires de conduites ;
- au moins deux éléments d'étanchéité (10, 10', 12), l'un au moins desquels est placé dans le siège d'étanchéité (4, 4', 46), en butée contre ladite bille (14) ;
dans lequel seule l'une desdites conduites fluidique agit en tant que conduite d'introduction (8) de l'élément d'étanchéité (10, 12) et la bille creuse (14) à l'intérieur du corps de robinet (2), pour positionner ledit élément (10, 12) et ladite bille (14) respectivement dans le siège d'étanchéité (4, 4', 46) et dans le siège de bille (6) ;
- un élément de compression de bille (16) délimitant un siège d'étanchéité (4') supplémentaire pour recevoir l'autre élément d'étanchéité (10') et relié à la conduite d'introduction (8) du corps de robinet (2) pour pousser ledit élément (10') contre la bille creuse (14) ;
dans lequel le corps de robinet (2) délimite trois sièges d'étanchéité (4, 4', 46), et dans lequel ledit robinet à bille (1) comprend des éléments d'étanchéité (10, 12) dont le nombre est égal au nombre de tels sièges (4, 4', 46) ;
ledit robinet à bille (1) étant **caractérisé en ce qu'**il comprend :
- un élément de renfort (26) couplé à un ou plusieurs éléments d'étanchéité (12), au moins partiellement inséré dans le siège d'étanchéité (4, 4', 46) pour limiter une déformation dudit élément d'étanchéité (12) lors du déplacement de la bille creuse (14) dans le siège de bille (6) ;
l'élément de renfort (26) étant au moins partiellement reçu dans l'élément d'étanchéité (12) et, par rapport à un axe de développement (X, X', X") autour duquel une ou plusieurs desdites conduites fluidiques (8, 8', 8") se développent, l'élément de renfort (26) étant agencé uniquement radialement à l'intérieur par rapport à l'élément d'étanchéité (12).

2. Robinet selon la revendication 1, dans lequel la conduite d'introduction (8) entoure une section de passage (36) supérieure à l'encombrement de la bille creuse (14) et à l'encombrement des éléments d'étanchéité (10, 12) associés au corps de robinet (2).

3. Robinet selon la revendication 1 ou 2, dans lequel la bille creuse (14) définit à l'intérieur de celle-ci une cavité traversante (18) ayant au moins une entrée annulaire (20) d'une taille au moins égale à, ou supérieure à, un bord interne (22) de l'élément d'étanchéité (10) reçu dans le corps de robinet (2).

4. Robinet selon l'une quelconque des revendications précédentes, comprenant un élément élastique (24) en correspondance avec au moins un siège d'étanchéité (4, 4', 46), entre l'élément d'étanchéité (10, 12) et le corps de robinet (2) et/ou entre l'élément d'étanchéité (10') et l'élément de compression de bille (16), ledit élément élastique (24) pouvant être comprimé par la bille creuse (14) pour insérer cette dernière dans le, et éventuellement l'extraire du, siège de bille (6).

5. Robinet selon l'une quelconque des revendications précédentes, dans lequel l'élément de renfort (26) est de forme annulaire ou tubulaire.

6. Robinet selon l'une quelconque des revendications précédentes, dans lequel au moins trois conduites fluidiques (8, 8', 8") se développent autour d'axes de développement (X, X', X") qui s'étendent sensiblement dans un même plan (P), et comprenant une quatrième conduite facultative qui se développe autour d'un autre axe de développement (Z) incident ou perpendiculaire par rapport audit plan (P).

7. Robinet selon l'une quelconque des revendications précédentes, dans lequel le corps de robinet (2) délimite trois ou quatre conduites fluidiques (8, 8', 8").

8. Robinet selon l'une quelconque des revendications précédentes, dans lequel la bille creuse (14) définit à l'intérieur de celle-ci une cavité traversante sensiblement cylindrique (18), ou ayant une forme en « L » ou « T ».

9. Procédé de fabrication d'un robinet à bille (1) selon l'une quelconque des revendications précédentes, comprenant les étapes de :
i) fourniture d'un corps de robinet (2) qui délimite trois sièges d'étanchéité (4, 4', 46), un siège de bille (6) et au moins trois conduites fluidiques (8, 8', 8") qui convergent dans le siège de bille (6) ;
ii.a) à travers une seule desdites conduites fluidiques, qui fait office de conduite d'introduction (8) d'éléments d'étanchéité (10, 12) dont le nombre est égal au nombre de tels sièges (4, 46) à l'intérieur du corps de robinet (2), positionnements desdits éléments (10, 12) dans les sièges étanchéité (4, 4', 46) ;
ii.b) introduction d'un élément de renfort (26) dans le corps de robinet (2), au niveau du siège d'étanchéité (4, 46), au moyen de la conduite d'introduction (8) ; moyennant quoi l'élément de renfort (26) est au moins partiellement reçu dans l'élément d'étanchéité (12) et, par rapport à un axe de développement (X, X', X") autour duquel une ou plusieurs desdites conduites fluidiques (8, 8', 8") se développent, l'élément de renfort (26) est agencé uniquement radialement à l'intérieur par rapport à l'élément d'étanchéité (12) ;
iii) à travers la conduite d'introduction (8), positionnement d'au moins une bille creuse (14) dans le siège de bille (6), en butée contre lesdits éléments d'étanchéité (10, 12), ladite bille (14) étant mobile par rapport au corps de robinet (2) pour permettre/empêcher la communication fluidique entre lesdites conduites (8, 8', 8") ;
iv) liaison d'un élément de compression de bille (16), délimitant un siège d'étanchéité (4') supplémentaire pour recevoir un autre élément d'étanchéité (10'), à la conduite d'introduction (8) du corps de robinet (2) pour pousser ledit élément (10') contre la bille creuse (14).

10. Procédé selon la revendication précédente, dans lequel l'étape ii) comprend une étape de positionnement d'un élément élastique (24) en correspondance avec au moins un siège d'étanchéité (4, 4', 46), entre l'élément d'étanchéité (10, 12) et le corps de robinet (2) et/ou entre l'élément d'étanchéité (10') et l'élément de compression de bille (16), ledit élément élastique (24) pouvant être comprimé par la bille creuse (14) pendant l'étape iii) pour l'insérer dans le, et éventuellement l'extraire du, siège de bille (6).
